# EUROPEAN PATENT SPECIFICATION

(11) **EP 0 408 906 B1**
(45) Date of publication and mention of the grant of the patent: **16.08.1995**
(21) Application number: 90111459.5
(22) Date of filing: 18.06.1990
(51) Int. Cl.: C04B 35/00, C04B 35/10

(54) **Water soluble cellulosic binder for ceramic tape casting**
Wasserlösliches Zellulose-Bindemittel zum Foliengiessen von Keramik
Liant cellulosique soluble dans l'eau pour coulage céramique en couches mince

(30) Priority: 19.06.1989 US 367601
(43) Date of publication of application: 23.01.1991
(73) Proprietor: AQUALON COMPANY, Wilmington Delaware 19850-5417 (US)
(72) Inventor: Burnfield, Keith Edward, Wilmington, Delaware 19802 (US); Gray, Harold Booker, Wilmington, Delaware 19802 (US)
(74) Representative: Lederer, Franz, Dr.

(56) References cited:
- EP-A- 0 210 874
- CHEMICAL ABSTRACTS, vol. 107, no. 12, 21 September 87 Columbus, Ohio, USA H.Tanaka: "Manufacture of Ceramic Substrate" ref. no. 101633S
- CHEMICAL ABSTRACTS, vol. 80, no. 24, 1974 Columbus, Ohio, USA R.E.Mistler: "High strength ceramic body" ref. no. 136832G
- CHEMICAL ABSTRACTS, vol. 104, no. 4, 27 January 1986 Columbus, Ohio, USA "Thermally conductive alumina ceramic sheets for integrated circuits" ref. no. 23374E
- CHEMICAL ABSTRACTS, vol. 105, no. 8, 25 August 1986 Columbus, Ohio, USA A.Kawamoto: "Method for shaping ceramic articles" ref. no. 65236N

## Description

### Field of the Invention

The invention relates to tape cast ceramics. In particular the invention relates to tape cast ceramic formulations containing a water soluble cellulosic.

### Background of the Invention

Tape casting is a widely used technique in the electronic ceramic industry. The technique allows for creating a thin ceramic sheet at a relatively low cost. Electronic parts, such as capacitors or circuit board substrates, can easily be stamped from these green sheets and fired.

Traditionally, ceramic tapes have been prepared by the following procedure.

A slip, a low viscosity ceramic powder slurry, is prepared containing alumina, polyvinyl butyral binder, a chlorinated solvent (trichloroethane), methanol or ethanol and a plasticizer. The slurry needs to be fluid, with viscosities preferably below 1 Pas (1000 cps).

The slip is generally ball milled with or without the binder. The binder may be added after ball milling. Before casting the slip is deaired and added to a hopper attached to a non-adhering conveyer belt. As the belt moves, the slip is pulled below a doctor blade set at a desired position,generally 25 - 5,000 microns (1-200 mils). The solvent is removed at room temperature or with heat from the cast film or tape on the conveyor belt. The dry tape is lifted from the end of the non-adhering belt and rolled on a wheel. the roll of ceramic tape is transferred to a stamping machine and electronic parts are stamped out. These parts are then fired.
Requirements for this technique include
Low viscosities
Slightly pseudoplastic rheology to prevent film spreading
A non-adhering conveyor belt such as Mylar^{R}, i.e.,poly (ethylene terephthalate) film from DuPont
Near net shape product
High solids loading (30-70%)
Rapid solvent removal (determining the length of the belt)
Low amounts of residual conducting materials
Film strength
Film flexibility
Traditionally, levels or organic binders used are in the 6-12% range. High densities and the elimination of voids, although desirable, are not critical in this application. This differs from structural ceramics in which strength is a primary concern.
EPA 210 874 discloses the preparation of a thin tape with a thickness not greater than 25 »m of a green ceramic precusor tape for dielectric ceramics from a slip composition comprising a dielectric component, a cellulosic resin and a binder. The solvent is preferably an organic liquid and only methylcellulose is mentioned as binder.
A process for making ceramic sheets wherein an aqueous slurry of a ceramic powder, an oil emulsifying agent, a modified cellulosic binder and a plasticiser is mixed with a slurry containing ceramic powder, a binder and an organic solvent before forming sheets is disclosed in JPA 60122767.

Ceramic tape casting techniques are discussed in publications such as: Karas et al., Advanced Ceramics Materials Vol. 3, No. 4, pp. 374-377 (1988); J. J. Thompson, Ceramic Bulletin, Vol. 42, No. 9 (1963); R. E. Mistler, Ceramic Processing Before Processing, Editor: Onida and Hench, pp. 411-448 (1978); Michael B. Bever, Editor-in Chief, Encyclopedia of Materials Science and Engineering, pp. 4855-4858.

Interest in aqueous tape cast systems has been expressed for reasons such as environmental and health hazard concerns connected with solvents. Aqueous systems would also eliminate the need for solvent recovery. Thus the present invention answers an existing need.

### Summary of the Invention

An aqueous ceramic tape formulation comprises a modified cellulosic binder, selected from the group consisting of hydroxyethylcellulose, hydroxypropylcellulose, methylhydroxypropylcellulose and methylhydroxyethylcellulose, with a molecular weight below 500,000; a mineral; a plasticizer and a dispersant in an aqueous system.

A ceramic component can be prepared by the steps:
(1) preparing a mineral dispersion,
(2) adding a water soluble polymer and ingredients so to prepare the ceramic tape formulation as identified above
(3) coating the formulation on a substrate; and
(4) firing the formulation to prepare a ceramic component.

In a method for producing capacitor tapes, the formulation is coated at 45°C or higher in step (3).

In a preferred method a vacuum is used to remove air from the tape formulation following step (2).

### Detailed Description of the Invention

Tape casting is a technique which produces a ceramic film from which thin electronic parts can be stamped. Traditionally, these systems use organo-soluble binders.

An objective of the invention was to develop a formulation for tape casting in an aqueous system utilizing a cellulosic as a water soluble polymer binder to improve green strength of an unfired ceramic formulation.

A preferred cellulosic is a hydroxyethylcellulose having a low ash content (below 0.5%) with a molecular weight below 500,000 as measured by intrinsic viscosity. Such a material is Natrosol^{R} 205L PHARM available from the Aqualon Company of Wilmington, Delaware. Other useful celluloses are low ash content methyl- hydroxyethylcellulose (MHEC), hydroxyethylcellulose (HEC), methylhydroxypropylcellulose (MHPC) and hydroxypropylcellulose (HPC). These materials are suitable binders in the 2 to 14% weight range for an aqueous ceramic tape formulation.

Ceramic tapes cast from an aqueous formulation combining these cellulosics show good to excellent flexibility, strength and storage stability. Ceramic components for the electronics industry can be produced with aqueous cellulosic formulations which avoid the solvent problems associated with prior art ceramics. In particular a ceramic tape containing low ash modified cellulosic binder with a molecular weight between 20,000 and 150,000 retained flexibility for months and could be redissolved in water.

Typical aqueous ceramic tape casting formulations comprise on a weight percent basis:

| | |
|---|---|
| Mineral such as alumina, barium titanate or silicia | 30 to 60 |
| Binder such as HEC, MHEC, MHPC, HPC | 5 to 14 |
| Plasticizer such as poyethylene glycol | 1 to 8 |
| Dispersant such as anionic polyacrylate | 1 to 8 |
| Water | 62 to 25 |

In preparing these tape formulations the mineral is first ball milled in the absence of a binder for up to twenty-four hours to insure that the tape surface will be smooth. After ball milling, the mineral is mixed with the dispersant using a high speed mixer. The cellulosic binder and plasticizer are then blended into the dispersed mineral to complete the formulation.

The invention has industrial applicability for producing ceramic components for the electronics industry.

The following examples illustrate the practice of the invention.

### Example 1

Two aqueous ceramic tape formulations were prepared with the following ingredients on a weight % basis:

| Ingredient | A | B |
|---|---|---|
| Alumina 325 mesh (0.044mm) from Alcoa Company | 34% | 49% |
| Binder (HEC) Natrosol^{R} 250 L PHARM from Aqualon | 7% | 6.2% |
| Carbowax^{R} PEG 400 from Union Carbide | 7% | 1.8% |
| Darvan^{R} 821A ammonium polyacrylate dispersant from R.T. Vanderbilt Co. | 2% | 6 % |
| Water | 50% | 37% |

The alumina was dispersed in the water with Darvan^{R} 821A using a high shear mixer. Then the alumina dispersion was ball milled for 15 hours using ceramic grinding pellets to break down agglomerates. Finally, the plasticizer and binder were added to prepare a formulation which is typically referred to as a slip. This slip was further milled to disperse the plasticizer and binder. This slip was then deaired under vacuum. The deaired slip was poured onto a poly (ethylene terephthalate) sheet and a blade was pulled across the slip to form a ceramic sheet or tape of approximately 25 to 5000 microns (1 to 200 mils) in thickness. The tape was allowed to dry and was then removed from the sheet.

Both dried tapes retained their original flexibility for a one year period. The tapes were smooth and fully suitable for firing to produce ceramic electronic components. Prior to firing the tapes could be redissolved and recoated if necessary.

### Example 2

A tape was prepared similar to Example 1 except that a Cowles blade was used instead of ball milling. The formula comprised the following ingredients in grams:

### Base

| | |
|---|---|
| Propylene Glycol | 80 |
| Water | 92 |
| Tamol^{R} SG1 Dispersant from Rohm & Haas | 9 |
| SGL^{R} Defoamer from Hercules Incorporated | 2 |
| Alumina (Example 1) (Mixed with Cowles blade) | 265 |
| SGL^{R} Defoamer from Hercules | 3 |
| Merlac^{R} 35 preservative | 1 |
| Triton ^{R} GR7M (surfactant from Rohm & Haas) | 0.5 |

### Formulation

| | |
|---|---|
| Base | 225 |
| Natrosol^{R} 250 L PHARM | 15.8 |
| Water | 36 |

A base or master batch was prepared using the first five ingredients and mixed with a high shear mixer for 30 minutes. The SGL^{R} defoamer, Merbac^{R} and Triton^{R} were added using an air mixer at slow speed. The base was complete at this point.

Tapes were cast similar to Example 1.

### Example 3

An aqueous ceramic tape formulation was prepared with the following ingredients on a weight % basis:

| | |
|---|---|
| Alumina 325 mesh (0,044 mm) | 34% |
| Hydroxypropylcellulose (Klucel^{R} M from Aqualon) | 7% |
| Carbowax^{R} 400 | 7% |
| Ammonium polyacrylate dispersant | 2% |
| Water | 50% |

The above ingredients were prepared as a slip in a metal beaker and placed on a high shear mixer. The heat generated from shear elevated the temperature of the slip to 45°C. The slip was removed and cast on a heated Mylar^{R} film. The slip at 45°C was essentially water thin, allowing for very thin films to be cast. At room temperature the slip was too viscous to be cast.

This technique allowed for casting very thin films from very low viscosity slips. This is required for producing capacitor tapes in the 25,4 - 50,8 »m (1-2mil) thick range, where thickness of the tape is determined by the viscosity of the slip.
A 152,4 »m (6 mil) tape was produced which exhibited excellent flexibility and strength.

Water soluble polymer and water were added to portions of the base. The addition of water was necessary only to reduce the viscosity of the slip to allow for easy casting.

## Claims

1. A ceramic tape formulation comprising a modified cellulosic binder selected from the group consisting of hydroxyethylcellulose, hydroxypropylcellulose, methylhydroxypropylcellulose and methylhydroxyethylcellulose with a molecular weight below 500,000; a mineral; a plasticizer and a dispersant in an aqueous system.

2. The formulation of claim 1 where the mineral is alumina, Silica or barium titanate.

3. The formulation of claim 2 where the binder is hydroxyethylcellulose.

4. The formulation of claim 3 where the plasticizer is polyethylene glycol.

5. The formulation of claim 4 where the dispersant is an anionic polyacrylate.

6. A process for preparing a ceramic component comprises the steps:
(1) preparing a mineral dispersion:
(2) adding a water soluble polymer and ingredients so to prepare the ceramic tape formulation of claim 1
(3) coating the formulation on a substrate; and
(4) firing the formulation to prepare a ceramic component.

7. The process of claim 6 where the ceramic tape formulation is degassed before step (3).

8. The process of claim 7 where the coating of step (3) is from 25 to 5000 microns thickness.

9. The process of claim 8 where the mineral is alumina, silica or barium titanate.

10. The process of claim 9 where the mineral is barium titanate.

11. The process of claim 10 where step (3) is done at 45°C or higher.

12. An aqueous ceramic tape casting formulation comprising on a weight percent basis:
| | |
|---|---|
| Alumina, barium titanate or silica | 30 to 60 |
| HEC, MHEC, MHPC, HPC binder with a molecular weight below 500,000 | 5 to 14 |
| Plasticizer | 1 to 8 |
| Dispersant | 1 to 8 |
| Water | 62 to 25 |

13. The formulation of claim 12 where the binder has a molecular weight between 20,000 and 150,000.

## Patentansprüche

1. Formulierung für Keramikbänder, die ein modifiziertes Cellulose-Bindemittel, ausgewählt aus der Gruppe bestehend aus Hydroxyethylcellulose, Hydroxypropylcellulose, Methylhydroxypropylcelluose und Methylhydroxyethylcellulose mit einem Molekulargewicht unter 500.000 , ein Mineral, ein Plastifizierungsmittel und ein Dispersionsmittel in einem wässrigen System umfasst.

2. Formulierung gemäß Anspruch 1, worin das Mineral Aluminiumoxid, Siliciumdioxid oder Bariumtitanat ist.

3. Formulierung gemäß Anspruch 2, worin das Bindemittel Hydroxyethylcellulose ist.

4. Formulierung gemäß Anspruch 3, worin das Plastifizierungsmittel Polyethylenglykol ist.

5. Formulierung gemäß Anspruch 4, worin das Dispersionsmittel ein anionisches Polyacrylat ist.

6. Verfahren zur Herstellung einer keramischen Komponente umfassend folgende Schritte:
(1) Herstellung einer Mineraldispersion,
(2) Hinzufügen eines wasserlöslichen Polymers und Beigabe von Bestandteilen, um so die Formulierung für Keramikbänder gemäß Anspruch 1 herzustellen,
(3) Auftragen der Formulierung auf eine Unterlage, und
(4) Brennen der Formulierung, um eine keramische Komponente herzustellen.

7. Verfahren gemäß Anspruch 6, bei dem die Formulierung für Keramikbänder vor Schritt (3) entgast wird.

8. Verfahren gemäß Anspruch 7, bei dem das Auftragen in Schritt (3) mit einer Stärke von 25 bis 5000 Mikrometer erfolgt.

9. Das Verfahren gemäß Anspruch 8, bei dem das Mineral Aluminiumoxid, Siliciumdioxid oder Bariumtitanat ist.

10. Verfahren gemäß Anspruch 9, bei dem das Mineral Bariumtitanat ist.

11. Verfahren gemäß Anspruch 10, bei dem Schritt (3) bei 45°C oder mehr durchgeführt wird.

12. Wässrige Formulierung für Keramikbänder, die auf Gewichtsprozentbasis umfasst:
| | |
|---|---|
| Aluminiumoxid, Bariumtitanat oder Siliciumdioxid | 30 bis 60 |
| HEC, MHEC, MHPC, HPC Bindemittel mit einem Molekulargewicht unter 500.000 | 5 bis 14 |
| Plastifizierungsmittel | 1 bis 8 |
| Dispersionsmittel | 1 bis 8 |
| Wasser | 62 bis 25 |

13. Formulierung gemäß Anspruch 12, bei der das Bindemittel ein Molekulargewicht zwischen 20.000 und 150.000 hat.

## Revendications

1. Formulation de céramique en couche mince comprenant un liant cellulosique modifié sélectionné parmi le groupe comprenant l'hydroxyéthylcellulose, l'hydroxypropylcellulose, le méthylhydroxypropylcellulose et le méthylhydroxyéthylcellulose, de masse moléculaire inférieure à 500 000 ; un minéral ; un plastifiant et un dispersant dans un système aqueux.

2. Formulation selon la revendication 1 dans laquelle le minéral est de l'alumine, de la silice ou du titanate de baryum.

3. Formulation selon la revendication 2 dans laquelle le liant est de l'hydroxyéthylcellulose.

4. Formulation selon la revendication 3 dans laquelle le plastifiant est du glycol polyéthylène.

5. Formulation selon la revendication 4 dans laquelle le dispersant est un polyacrylate anionique.

6. Procédé de préparation d'un composant céramique qui comprend les étapes :
(1) de préparation d'une dispersion minérale ;
(2) d'addition d'un polymère soluble dans l'eau et des ingrédients, pour ainsi préparer la formulation de céramique en couche mince selon la revendication 1 ;
(3) d'enduction de la formulation sur un substrat ; et
(4) de cuisson de la formulation pour préparer un composant en céramique.

7. Procédé selon la revendication 6 dans lequel la formulation de céramique en couche mince est dégazée avant l'étape (3).

8. Procédé selon la revendication 7 dans laquelle l'enduction à l'étape (3) est épaisse de 25 à 5 000 microns.

9. Procédé selon la revendication 8 dans lequel le minéral est de l'alumine, de la silice ou du titanate de baryum.

10. Procédé selon la revendication 9 dans lequel le minéral est du titanate de baryum.

11. Procédé selon la revendication 10 dans lequel l'étape (3) est réalisée à 45° C ou plus.

12. Formulation aqueuse pour coulage céramique en couche mince comprenant, sur une base en pourcentage du poids :
| | |
|---|---|
| Alumine, titanate de baryum ou silice | 30 à 60 |
| Liant HEC, MHEC, MHPC, HPC de masse moléculaire inférieure à 500 000 | 5 à 14 |
| Plastifiant | 1 à 8 |
| Dispersant | 1 à 8 |
| Eau | 65 à 25 |

13. Formulation selon la revendication 12 dans laquelle le liant a une masse moléculaire comprise entre 20 000 et 150 000.
